Europäisches Patentamt

European Patent Office

Office européen des brevets

(19)

(11) Publication number: **0 061 243**
**B1**

(12) **EUROPEAN PATENT SPECIFICATION**

(45) Date of publication of patent specification: **11.06.86**

(51) Int. Cl.⁴: **G 02 B 6/38**

(21) Application number: **82301066.5**

(22) Date of filing: **03.03.82**

(54) Optical waveguide connector.

(30) Priority: **16.03.81 US 244454**
**16.03.81 US 244527**
**16.03.81 US 244526**

(43) Date of publication of application:
**29.09.82 Bulletin 82/39**

(45) Publication of the grant of the patent:
**11.06.86 Bulletin 86/24**

(84) Designated Contracting States:
**AT BE CH DE FR GB IT LI NL SE**

(56) References cited:
**EP-A-0 011 561**
**DE-A-1 200 614**
**US-A-1 817 772**
**US-A-3 569 933**
**US-A-3 637 284**
**US-A-4 081 208**
**US-A-4 178 068**
**COMPUTER DESIGN, vol.20, no.6, June 1981,
Winchester, Mass. (US) "Fiber optic
components break price barrier in short range
transmission", pages 56, 60**

(73) Proprietor: **AMP INCORPORATED**
**P.O. Box 3608 449 Eisenhower Boulevard
Harrisburg Pennsylvania 17105 (US)**

(72) Inventor: **Bowen, Terry Patrick
York Hill Drive
Etters Pennsylvania 17319 (US)**
Inventor: **Caron, Bernard George
4330 Winthrop Drive
Harrisburg Pennsylvania 17112 (US)**
Inventor: **Glover, Douglas Wade
2309 Valley Road
Harrisburg Pennsylvania 17104 (US)**
Inventor: **Hoffer, John Carey
507 North 36th Street
Harrisburg Pennsylvania 17109 (US)**

(74) Representative: **Gray, Robin Oliver et al
BARON & WARREN 18 South End Kensington
London W8 5BU (GB)**

## Description

The present invention relates to optical fiber connections in general, and in particular to fiber connectors comprising a retention sleeve that is secured onto an optical cable and into a receptacle which functions to axially locate a single optical fiber on the axis of a receptacle bore.

Increased penetration of fiber optics technology into data distribution and communications applications have been primarily inhibited by cost factors. Presently available connectors for axially aligning a pair of fibers typically comprise multiple components which are relatively expensive to manufacture. Accordingly, it has been economically undesirable to convert hard wire distribution applications to fiber optic systems, partly due to the cost disadvantage of fiber optic connector components.

Moreover, presently available fiber optic connector technology requires that the end surface of the optical fiber be polished in order to achieve an efficient optical coupling. The polishing procedure further adds to the applied cost of the product and creates myriad problems in field applications. Also, existing connectors often require the use of specialized tooling in effectuating a fiber termination, and they further require the use of adhesive materials for bonding the fiber to the connector unit. The inconveniences and expense of these requirements are obvious.

A further problem confronted by fiber optic connector technology is attributable to the fact that a variety of cable sizes exists in the industry. For example, the relatively large plastic fiber used in certain systems can range in size between 41 to 102 thousandths of a centimeter (16 to 40 thousandths of an inch). Consequently, the connectors for terminating these fibres must accommodate this wide range of potential fiber sizes, which further complicates the achievement of a suitable connector system. To complicate matters further, the outer diameter of jacket, which protects the fibres in a cabling structure, can also vary. Presently available connectors, because of their alignment techniques, have difficulty in accommodating the termination of the wide range of cable sizes which a user must confront in the optical cable world.

It is known from EP—A 0011561 to provide a member for coaxially locating an optical wave guide within a bore of a connector, comprising a body for insertion into the bore, the body having an axial passageway for receiving the wave guide, a forward alignment nose portion having an opening therethrough communicating with the passageway, and a rearward passageway portion for passage of the wave guide. The nose portion serves to centre the wave guide which is secured to the body by crimping.

It is known from US—A 3 569 933 and US—A 3 637 284 to provide a retention member for securing a fibre optic wave guide in the bore of a receptacle which comprises a U-shaped ferrule adapted to be crimped about the wave guide into a tubular body. The ferrule is formed with inwardly directed tines which bite into the wave guide sheath on crimping, and with outwardly and rearwardly directed tines for engaging a forward facing shoulder of the receptacle to retain the ferrule therein.

It is known from US—A 4 081 208 to provide a termination member for a conductor and wave guide for pluggable connection into a sleeve and which comrises a sleeve formed with forwardly directed tines which after assembly to a composite cable are pushed in to penetrate the cable and secure the sleeve thereto.

It is known from DE—B 1 200 614 to provide a cable termination or coupling in which tubular inserts are internally and externally serrated to resist withdrawl of the cable and withdrawl of the insert from a surrounding sleeve.

The invention seeks to improve on the known fire optic connectors by providing retention means adapted to accommodate a range of cable sizes and a connector capable of field assembly and pluggable connection.

A retention member for retaining a fibre optic cable within a bore of a receptacle, according to the invention comprises a tubular sleeve having a first series of inwardly directed tines angularly spaced around the sleeve for engaging the cable sheath and a second series of outwardly directed tines extending rearwardly for engaging the receptacle and resisting withdrawl of the sleeve, characterised in that the tubular sleeve is tubular prior to insertion of the cable therein, in that the first series of inwardly directed tines extend resiliently forwardly within the sleeve prior to insertion of the cable therein, in such a manner that upon insertion of the cable forwardly into the sleeve the said tines resiliently engage the sheath thereof to admit forward movement of the cable into the sleeve and upon exertion of a force axially rearwardly on the cable the said tines penetrate the sheath thereby to secure the sleeve to the cable, and in that the second series of outwardly directed tines are arranged resiliently to engage the side wall of the bore when the sleeve is inserted therein in such a manner that upon insertion of the sleeve forwardly into the bore the said tines resiliently engage the bore side walls to admit forward movement and upon application of a rearward axial force on the cable the said tines plough into the side wall of bore to resist withdrawal of the sleeve and secure the tubular sleeve retention member in the bore.

The invention will now be described by way of example with reference to the accompanying partly diagrammatic drawings, in which:—

Figure 1 is an exploded perspective view of a splice assembly, with the receptacle component mounted to project through a bulkhead and with one retention sleeve exploded from the receptacle bore.

Figure 2 is a longitudinal section view through the splice assembly illustrated in Figure 1, illustrating one of the retention sleeves positioned in assembly condition, and one retention sleeve external of the receptacle bore.

Figure 3 is a transverse section view through the splice assembly illustrated in Figure 2, taken along the line 3—3, and illustrates operation of the retention sleeve tines in effecting retention of the component parts in the assembled condition.

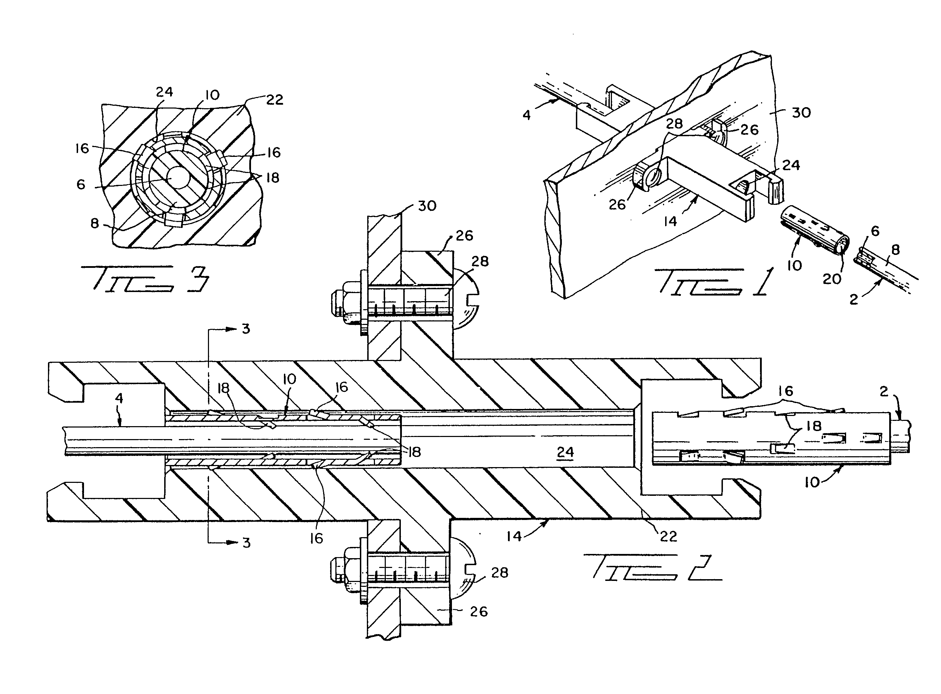

Referring to Figures 1 to 3, the splice assembly is intended to mechanically and optically couple a pair of optical fibers 2, 4 of the general fiber type comprising a waveguide core 6 encased within an outer cladding sheath 8. The splice assembly comprises a pair of retention sleeves 10 and a splice bushing or receptacle 14 which is suited for projection through a bulkhead or the like. As best viewed in Figure 2, each retention sleeve 10 comprises a plurality of annularly-spaced and outwardly-projecting tines 16 formed therefrom. The tines 16 project outwardly, and are biased in a rearward direction for a purpose explained below. In addition, each retention sleeve further constitutes a plurality of annularly-located and inwardly-projecting tines 18, which are biased to project into an axial sleeve bore 20. It will be appreciated that the precise number of projections 16, 18 is not critical, and that the projections are spaced apart and formed by a stamping operation through the metallic retention sleeve, forming the projections accordingly.

The splice bushing 14, with continued reference to Figure 2, comprises an elongate housing 27 having an axial bore 24 extending therethrough. The housing 22 further is adapted to provide an annular flange 26 which is located intermediate the length thereof, and which receives a pair of mounting screw/nut assemblies 28. As stated previously, the housing 22 is adapted to be mounted onto a bulkhead 30, as shown in Figure 1 or it can be free-standing.

With combined reference to Figures 1 and 2, the splice assembly operates as follows. The optical fiber 2 is inserted through the axial sleeve bore 20, and severed to a coplanar relationship with a forward end of the sleeve. The forward bias of the inward tines 18 of the retention sleeve permits engagement between the inserted optical fiber 4 and the tines 18, yet does not prohibit advancement of the optical fiber through the retention sleeve. The tines 18 are resiliently biased against the outer cladding sheath 8 of the optical fiber at this point. Thereafter, by exerting an axial force on the optical fiber in a rearward direction, the optical fiber is drawn backwards in the retention sleeve until the inward tines 18 of the retention sleeve penetrate into the cladding sheath. Thus, the retention tines 18 operate to establish a mechanical engagement between the retention sleeve and the optical fiber extending therethrough and further operate to inhibit a rearward withdrawal of the optical fiber from the retention sleeve. The forward portion of the waveguide is located substantially coplanar with a forward end of its respective retention sleeve.

With particular reference to Figure 2, each retention sleeve, having been mechanically attached to the optical fiber as described above, is inserted into a respective end of axial bore 24 of the housing 22. The rearward bias of the outer tines 16 of the retention sleeve permits a regular progression of the retention sleeve into the axial bore, and establishes a resilient engagement with the sidewalls defining the axial bore 24. When the retention sleeve has been advanced so that the forward end of the retention sleeve is located approximately intermediate of the axial bore 24, a second rearward axial force is exerted upon the optical fiber 4, which causes the outer tines 16 of the sleeve to plow into the sidewalls defining the axial bore 24. Consequently, the retention sleeve is securely retained within the housing 22, by operation of the resilient outward tines 16. Also, the axis of the retention sleeve 10 is fixedly located on the axis of the housing bore 24. When the opposite retention sleeve is inserted into its respective end of the bore and brought into abutting opposition to the first retention sleeve, the pair of optical fibers are axially aligned and an optical coupling is thereby established. Figure 3 represents in section view the operation of the outwardly and inward tines of the retention sleeve in operating to secure a positive mechanical engagement between the optical fiber and retention sleeve, and between the retention sleeve and the splice housing.

It will be readily appreciated that in providing an optical splice assembly comprising three major component parts, the subject invention can be manufactured in an inexpensive manner. The housing 22 is intended to be produced from a plastics material, and the retention sleeves 10, are preferably composed of a metallic composition. Moreover, retention sleeves 10 are intended to be produced from a stamped blank, which is subsequently formed into its final tubular shape. Moreover, it will be further appreciated that assembly of the subject invention may be effectuated manually, without requiring the use of specialized assembly tools. This further provides an advantage in cost savings, and permits ready assembly of the splice under field conditions.

**Claims**

1. A retention member for retaining a fibre optic cable (2) within a bore (24) of a receptacle (14), the retention member comprising a tubular sleeve (10) having a first series of inwardly directed tines (18) angularly spaced around the sleeve (10) for engaging the cable sheath (8) and a second series of outwardly directed tines (16) extending rearwardly for engaging the receptacle (14) and resisting withdrawal of the sleeve (10), characterised in that the tubular sleeve (10) is tubular prior to insertion of the cable (2) therein, in that the first series of inwardly directed tines (18) extend resiliently forwardly within the sleeve (10) prior to insertion of the cable therein, in such a manner that upon insertion of the cable (2) forwardly into the sleeve (10) the said tines (18) resiliently engage the sheath (8) thereof to admit forward movement of the cable (2) into the sleeve (10) and upon exertion of a force axially rearwardly on the cable (2) the said tines (18) penetrate the sheath (8) thereby to secure the sleeve (10) to the cable, and in that the second series of outwardly directed tines (16) are arranged resiliently to engage the side walls of the bore (24) when the sleeve is inserted therein in such a manner that upon insertion of the sleeve (10) forwardly into the bore (24) the said tines (16) resiliently engage the bore (24) side walls to admit forward movement and upon application of a rearward axial force on the cable (2) the said tines (16) plough into the side wall of bore (24) to resist withdrawal of the sleeve (10) and secure the tubular sleeve retention member (10) in the bore (24).

2. A fibre optic connector comprising an open ended bore (24) forming a receptacle for a retention member (10) as claimed in claim 1 mounted on a fibre optic cable (2) characterised in that the retention member (10) is mounted on an end portion of the cable (2) having a severed end in coplanar relationship with a forward end of the retention member (10), the retention member (10) being disposed within an end of the receptacle bore (24) with the first series of tines (18) resiliently biased against the cable (2) and penetrating an outer cladding thereof and the second series of tines (16) resiliently engaging the bore side walls and rearwardly ploughed thereinto.

3. A fibre optic connector as claimed in claim 2 characterised in that a further retention member (10) according to claim 1 is mounted an an end portion of a further cable (4) having a severed end in coplanar relationship with a forward end of said further retention member (10), said further retention member (10) being disposed within the opposite end of the receptacle bore (24) with its first series of tines (18) resiliently biased against the further cable (4) and penetrating an outer cladding thereof and its second series of tines (16) resiliently engaging the bore (24) side walls and rearwardly ploughed thereinto, the cable ends being in substantially abutting axially aligned relationship.

**Patentansprüche**

1. Halteelement zum Halten eines Faseroptikkabels (2) innerhalb einer Bohrung (24) einer Fassung (14), wobei das Halteelement eine rohrförmige Hülse (10) umfaßt, die eine erste Reihe von einwärts gerichteten Zacken (18) besitzt, welche im Winkelabstand um die Hülse (10) herum zum Eingriff mit einer Kabelhülle (8) angeordnet sind, sowie eine zweite Reihe von auswärts gerichteten Zacken (16), die nach hinten ragen zum Eingriff mit der Fassung (14) und die dem Herausziehen der Hülse (10) entgegenwirken, dadurch gekennzeichnet, daß die rohrförmige Hülse (10) vor dem Einsetzen des Kabels (2) in sie rohrförmig ist, daß die erste Reihe von einwärts gerichteten Zacken (18) sich elastisch innerhalb der Hülse (10) vor dem Einsetzen des Kabels in diese vorwärts erstreckt, und zwar derart, daß beim Einsetzen des Kabels (2) nach vorne in die Hülse (10) hinein diese Zacken (18) elastisch mit seiner Hülle (8) in Eingriff treten, um die Vorwärtsbewegung des Kabels (2) in die Hülse (10) hinein zu gestatten und beim Ausüben einer axial rückwärts gerichteten Kraft auf das Kabel (2) diese Zacken (18) in die Hülle (8) eindringen, um dadurch die Hülse (10) am Kabel zu befestigen, und daß die zweite Reihe von auswärts gerichteten Zacken (16) elastisch zum Eingriff mit den Seitenwänden der Bohrung (24) angeordnet ist, wenn die Hülse darin derart eingesetzt wird, daß beim Einsetzen der Hülse (10) nach vorne in die Bohrung (24) hinein diese Zacken (16) elastisch mit den Seitenwänden der Bohrung (24) in Eingriff treten, um die Vorwärtsbewegung zu gestatten, und beim Anlegen einer rückwärts gerichteten Axialkraft auf das Kabel (2) diese Zacken (16) in die Seitenwände der Bohrung (24) hineingraben, um dem Herausziehen der Hülse (10) entgegenzuwirken und das rohrförmige Hülsen-Halteelement (10) in der Bohrung (24) festzulegen.

2. Faseroptikverbinder mit einer Bohrung (24) mit offenem Ende, die eine Fassung für ein Halteelement (10) bildet, wie in Anspruch 1 beansprucht, und auf einem Faseroptikkabel (2) montiert ist, dadurch gekennzeichnet, daß das Halteelement (10) auf einem Endabschnitt des Kabels (2) montiert ist, welches ein abgetrenntes Ende in koplanarer Beziehung mit einem vorderen Ende des Halteelements (10) aufweist, daß das Halteelement (10) innerhalb eines Endes der Fassungsbohrung (24) angeordnet ist, wobei die erste Reihe von Zacken (18) elastisch gegen das Kabel (2) vorgespannt ist und in eine äußere Beschichtung des Kabels eindringt, und daß die zweite Reihe von Zacken (16) elastisch mit den Seitenwänden der Bohrung im Eingriff steht und in diese nach rückwärts eingegraben ist.

3. Faseroptikverbinder nach Anspruch 2, dadurch gekennzeichnet, daß ein weiteres Halteelement (10) nach Anspruch 1 auf einem Endabschnitt eines weiteren Kabels (4) montiert ist, das ein abgetrenntes Ende in koplanarer Beziehung mit einem vorderen Ende des weiteren Halteelements (10) besitzt, daß das weitere Halteelement (10) innerhalb des entgegengesetzten Endes der Fassungsbohrung (24) angeordnet ist, wobei seine erste Reihe von Zacken (18) elastisch gegen das weitere Kabel (4) vorgespannt ist und in eine äußere Beschichtung des Kabels eindringt, und daß seine zweite Reihe von Zacken (18) elastisch mit den Seitenwänden der Bohrung (24) im Eingriff steht und nach hinten darin eingegraben ist, und daß die Kabelenden im wesentlichen in axial ausgerichteter Beziehung zueinander aneinanderstoßen.

**Revendications**

1. Elément de retenue destiné à retenir un câble (2) à fibre optique dans un alésage (24) d'un logement (14), l'élément de retenue comprenant un manchon tubulaire (10) qui comporte une première série de dents (18) dirigées vers l'intérieur, espacées angulairement autour du manchon (10) afin d'entrer en prise avec la gaine (8) du câble, et une seconde série de dents (16) dirigées vers l'extérieur, s'étendant vers l'arrière afin d'entrer en prise avec le logement (14) et de résister au retrait du manchon (10), caractérisé en ce que le manchon tubulaire (10) est tubulaire avant que le câble (2) y soit inséré, en ce que la première série de dents (18) dirigées vers l'intérieur s'étend élastiquement vers l'avant à l'intérieur du manchon (10) avant l'insertion du câble dans ce dernier, d'une manière telle qu'à la suite de l'insertion du câble (2) vers l'avant dans le manchon (10), lesdites dents (18) établissent élastiquement une prise avec la gaine (8) du câble pour permettre un mouvement du câble (2) vers l'avant dans le manchon (10) et, à la suite de l'application d'une force dirigée axialement vers l'arrière sur le câble (2), lesdites dents (18) pénètrent dans la gaine (8) pour fixer ainsi le manchon (10) sur le câble, et en ce que la seconde série de dents (16) dirigées vers l'extérieur est agencée pour établir élastiquement une prise avec la paroi latérale de l'alésage (24) lorsque le manchon (10) y est inséré d'une manière telle qu'à la suite de l'insertion du manchon (10) vers l'avant dans l'alésage (24), lesdites dents (16) établissent élastiquement une prise avec les parois latérales de l'alésage (24) pour permettre un mouvement vers l'avant et, à la suite de l'application d'une force dirigée axialement vers l'arrière sur le câble (2), ledites dents (16) pénètrent dans la paroi latérale de l'alésage (24) afin de résister au retrait du manchon (10) et de fixer l'élément (10) de retenue à manchon tubulaire dans l'alésage (24).

2. Connecteur pour fibres optiques, présentant un alésage (24) ouvert à ses extrémités, formant un logement pour un élément de retenue (10) selon la revendication 1, monté sur un câble (2) à fibres optiques, caractérisé en ce que l'élément (10) de retenue est monté sur un tronçon extrême du câble (2) présentant une extrémité sectionnée et coplanaire à une extrémité avant de l'élément (10) de retenue, l'élément (10) de retenue étant disposé dans une extrémité de l'alésage (24) du logement de façon que la première série de dents (18) soit rappelée élastiquement contre le câble (2) et pénètre dans un revêtement extérieur de celui-ci et que la seconde série de dents (16) entre en prise élastiquement avec les parois latérales de l'alésage et y pénètre vers l'arrière.

3. Connecteur pour fibres optiques selon la revendication 2, caractérisé en ce qu'un autre élément (10) de retenue selon la revendication 1 est monté sur un tronçon extrême d'un autre câble (4) présentant une extrémité sectionnée qui est coplanaire à une extrémité avant dudit autre élément (10) de retenue, ledit autre élément (10) de retenue étant disposé dans l'extrémité opposée de l'alésage (24) du logement de façon que sa première série de dents (18) soit rappelée élastiquement contre l'autre câble (4) et pénètre dans un revêtement extérieur de celui-ci et que sa seconde série de dents (16) entre en prise élastiquement avec les parois latérales de l'alésage (24) et y pénètre vers l'arrière, les extrémités du câble étant sensiblement en butée et en alignement axial.